# EUROPEAN PATENT SPECIFICATION

(11) **EP 2 693 519 B1**
(45) Date of publication and mention of the grant of the patent: **23.11.2016**
(21) Application number: 11862490.7
(22) Date of filing: 16.12.2011
(51) Int. Cl.: H01M 2/10, H01M 10/6563, H01M 10/643, H01M 10/627, H01M 10/613, H01M 2/20

(54) **BATTERY PACK**
BATTERIEPACKUNG
BLOC BATTERIE

(30) Priority: 31.03.2011 JP 2011078170
(43) Date of publication of application: 05.02.2014
(73) Proprietor: Sanyo Electric Co., Ltd., Moriguchi-shi, Osaka 570-8677 (JP)
(72) Inventor: Uehara , Yuji, Osaka 570-8677 (JP); Kawabata , Masahiro, Osaka 570-8677 (JP)
(74) Representative: Hertz, Oliver
(86) International application number: PCT/JP2011/079134
(87) International publication number: WO 2012/132135

(56) References cited:
- EP-A1- 2 284 927
- EP-A2- 2 284 928
- JP-A- 2001 060 466
- JP-A- 2005 285 456
- JP-A- 2008 251 262
- JP-A- 2008 270 460
- JP-A- 2010 177 204
- DATABASE WPI Section EI, Week 201104 Thomson Scientific, London, GB; Class X16, AN 2010-Q68926 XP002726757, DAOYONG LIN: "Cylindrical battery module assembly device", -& CN 201 655 871 U (SHANDONG RUNFENG GROUP NEW ENERGY CO LTD) 24 November 2010 (2010-11-24)

## Description

### BACKGROUND OF THE INVENTION

### 1. Field of the Invention

The present invention relates to a battery pack in which a plurality of rechargeable unit cells are stored in an external case, in particular, relates to a battery pack in which the external case and a battery holder are integrated.

### 2. Description of the Related Art

The battery pack is connected to a multitude of unit cells in series, thereby increasing an output voltage, and connected to the multitude of unit cells in parallel, thereby increasing an output current. In particular, in recent years, while the number of unit cells to be stored increases due to demands on the enhancement of capacity, it is necessary to arrange the unit cells congregated in a limited space of an external case, in view of demands on reduction in size of the battery pack. However, when the unit cells are charged and discharged at a large current, heat is generated, and it is necessary to arrange power semiconductor elements such as transistors and diodes, in order to perform charging and discharging, which makes it important to secure heat radiation.

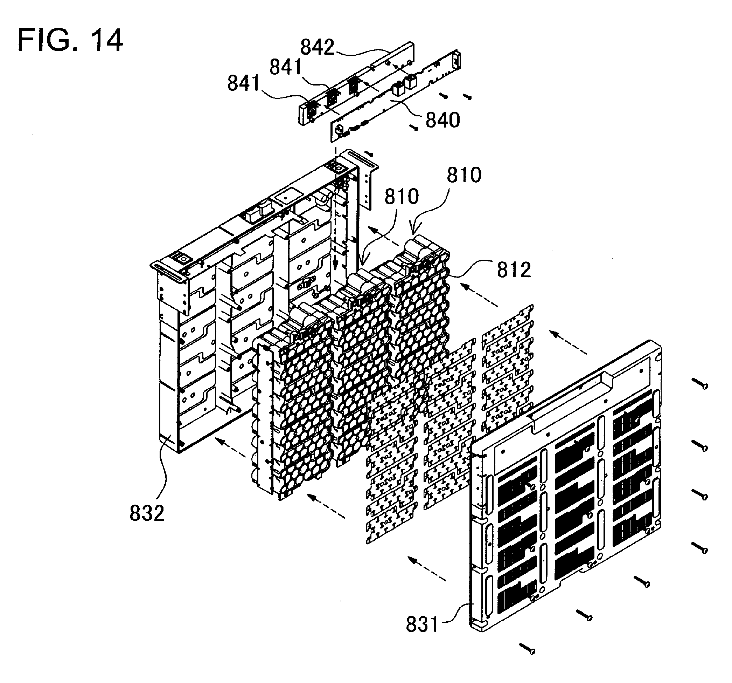

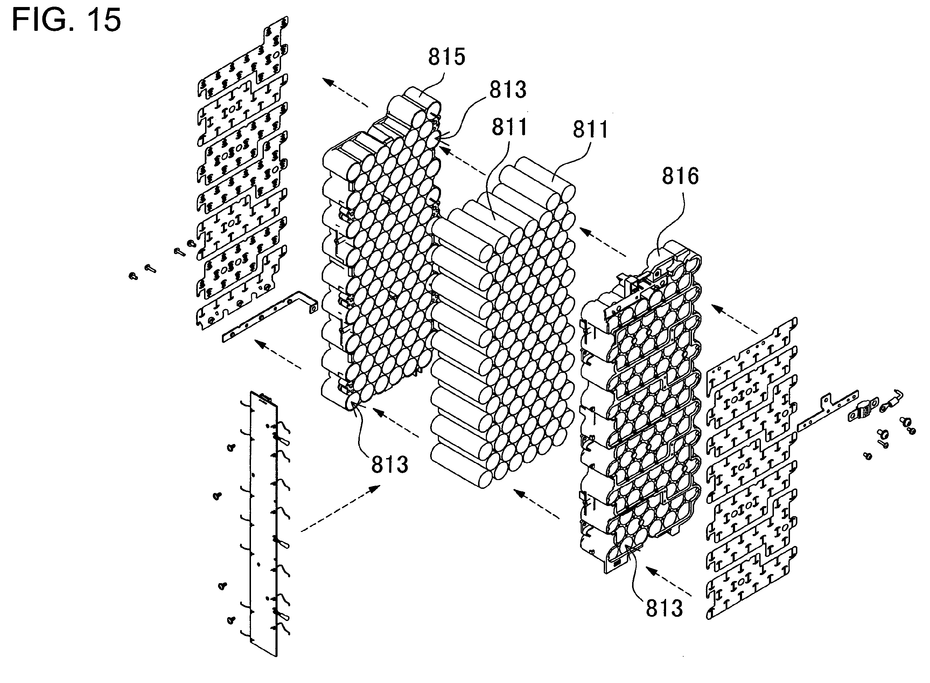

FIGS. 14 and 15 are exploded perspective views of a battery pack which the inventor of the present invention has developed before. The battery pack includes a plurality of unit cells 811, a battery block 810 that is constituted by battery holders 815 and 816 in which there is provided a battery storage section 813 which individually stores each unit cell 811, a main circuit board 840 connected to the unit cells 811 of the battery block 810, a heat generation component 841 connected to the main circuit board 840, a tabular heat radiation block 842 that fixes the heat generation component 841 in a thermal-coupling state, and external cases 831 and 832 that inwardly store the heat radiation block 842 and the battery block 810.

In this battery pack, the unit cells are stored in the battery holder, thereby constituting the battery block, which is welded with a lead plate on the side surface, and further, a circuit board is arranged and stored in the external case. As is illustrated by an exploded perspective view of FIG. 15, the battery holder is divided in two and holds the unit cells in such a manner that the unit cells are sandwiched between the divided battery holders on both sides thereof. Accordingly, the divided battery holders each arrange and fix a plurality of cylindrical battery holding cylinders that store the unit cells.

Refer to Japanese Laid-Open Patent Publication No. 2008-251262.

In this constitution, it is necessary to fix the battery holding cylinders adjacently disposed. However, as is described above, when the unit cells are charged and discharged at a large current, heat is generated, and when the unit cells that generate the heat are congregated, it is difficult to radiate the heat. In particular, a request for high output characteristics in recent years increases a demand on a large current, and securing heat radiation is extremely important in terms of reliability. In contrast, when the battery holding cylinders are detached, the battery holder cannot be constituted, and the unit cells cannot be retained.

EP 2 284 928 A2 discloses a battery pack with a structure for improving a heat dissipation from batteries, including a holder case with a columnar structure, wherein the batteries are disposed in the columnar structure with a mutual gap therebetween.

The columnar holder does not store an individual battery but is commonly used to support a plurality of neighbouring batteries. For one battery to be accommodated four columnar holders have to be defined.

The present invention has been made to solve the above-described problems. It is a main object of the present invention to provide a battery pack that can improve heat radiation of unit cells and efficiently perform an assembly operation.

### SUMMARY OF THE INVENTION

In order to achieve the object described hereinabove, the battery pack according to the first aspect of the present invention may include a plurality of unit cells 11 whose exterior is extended in one direction and formed in an approximately cylindrical shape, a first external case 12A whose external shape is formed in an approximately rectangular shape, and in which a plurality of approximately cylindrical battery storage sections 13 that individually store the plurality of unit cells 11 are provided on an inner surface, and a second external case 12B which is configured to include the battery storage sections 13 that individually store the plurality of unit cells 11 on an inner surface, join the first external case 12A, and hold the unit cells 11 in such a manner as to sandwich the unit cells 11 between both sides in a longitudinal direction, and the second external case 12B whose external shape is formed in an approximately rectangular shape, and in which a gap GP can be provided between the battery storage sections 13 that are adjacently disposed. Accordingly, this eliminates a double structure in which the battery holder is stored in the external case, while the unit cells are held with a conventional battery holder, whereby the external case can directly hold the unit cells. Accordingly, the number of components can be reduced, which is contributed to reduction in costs and reduction in weight. Also, the battery holder and the external case are integrally constituted, which allows lead plates and the like to be embedded in the external case in advance, so that an advantage in that operation efficiency at the time of assembly can be improved is obtained. In addition a gap is provided between the battery storage sections, thereby improving the heat radiation of the unit cells.

Furthermore, also, according to the battery pack of the second aspect of the present invention, the first external case 12A and the second external case 12B may each include an open frame 19 communicated with each battery storage sections 13, and the battery pack can further include a first external panel 30A and a second external panel 30B that each have thermal conductivity to block the open frame 19 provided in the first external case 12A and the second external case 12B. Accordingly, this allows the unit cells to face the open frame, and the external panel having excellent thermal conductivity is disposed on the open frame, so that the heat radiation of the unit cells can be improved.

Furthermore, also, according to the battery pack of the third aspect of the present invention, the first external panel 30A and the second external panel 30B may each include a plurality of slits to be opened. Accordingly, the unit cells, which are conventionally surrounded by the external case and the battery holder and involved with difficulty in radiating heat to the outside, can be communicated with the outside through the open frame of the external case and the slits of the external panel, and the advantage in that the heat radiation can be improved is obtained.

Furthermore, also, according to the battery pack of the fourth aspect of the present invention, at least any of the first external case 12A and the second external case 12B may be configured to include a first ventilation port 14 to be opened on a first surface constituted in a rectangular shape and a second ventilation port 15 to be opened on a second surface opposite to the first surface, and the battery pack can be held in a posture in which the first ventilation port 14 and the second ventilation port 15 are each opened approximately in a vertical direction. Accordingly, the battery pack is arranged in such a manner that the first ventilation port and the second ventilation port provided on the opposite surface are opened approximately in the vertical direction, and air, which is upwardly transferred by natural convection of heat in the external case, is discharged through the ventilation port which is upwardly opened, and fresh outside air is taken in through the ventilation port which is downwardly opened, whereby it can be configured to achieve natural heat radiation.

Furthermore, also, according to the battery pack of the fifth aspect of the present invention, the first surface and the second surface may be intersected with a surface on which the opening surface is provided. Accordingly, heat on the end surface of the unit cells is radiated from the opening surface, while the side surface of the unit cells can be cooled by the cooling gas flowing through the first ventilation port and the second ventilation port, whereby realizing the constitution in which the periphery of the unit cells can efficiently be radiated.

Furthermore, also, according to the battery pack of the sixth aspect of the present invention, on a third surface, at least any of the first external case 12A and the second external case 12B may include an inclined surface 24a that is provided in a manner as to be partially depressed on a surface of the third surface, and the battery pack is held in a posture in which the third surface, on which the inclined surface 24a is provided, serves as an approximately perpendicular surface, and the inclined surface 24a is further inclined upwardly in a separating direction with respect to a flat surface of the third surface, and a connector section 16 to connect an external apparatus can be provided on an end surface of the inclined surface 24a. Accordingly the connector is arranged at an end surface of the inclined surface, whereby avoiding the state where the connector is protruded from the side surface of the external case and avoiding the situation where there occurs the interference and flexure of the connector. Furthermore, the upper surface of the inclined surface is formed in an eave shape, whereby obtaining an advantage in that infiltration of dust can be reduced.

Furthermore, also, according to the battery pack of the seventh aspect of the present invention, the first external case 12A and the second external case 12B may be made of resin, and the first insulation sheet 25A and the second insulation sheet 25B may have high thermal conductivity and may be made of resin having insulation properties, and the first external panel 30A and the second external panel 30B which are made of metal may be provided. Accordingly, while the external case has insulation properties, an insulation resin sheet having high thermal conductivity is applied as the insulation sheet with respect to a portion where the heat radiation of the unit cells is easily facilitated, and further, the external panel is made of metal, thereby facilitating the heat radiation.

### BRIEF DESCRIPTION OF THE DRAWINGS

FIG. 1 is a perspective view of a battery pack viewed from a front surface thereof according to a first embodiment;
FIG. 2 is a perspective view of the battery pack viewed from a back surface thereof according to FIG. 1;
FIG. 3 is an exploded perspective view illustrating the internal structure of the battery pack according to FIG. 1;
FIG. 4 is an exploded perspective view illustrating the internal structure of the battery pack viewed from the back surface in FIG. 3;
FIG. 5 is a perspective view of an external case according to the first embodiment;
FIG. 6 is an exploded perspective view illustrating the internal structure of the external case according to the first embodiment;
FIG. 7 is an enlarged front view of part of an external side surface of the external case according to the first embodiment;
FIG. 8 is an exploded perspective view illustrating the internal structure of the battery pack according to a modified example;
FIG. 9 is a central cross-sectional view in the battery pack and an enlarged cross-sectional view of a battery storage section according to the first embodiment;
FIG. 10 is a perspective view from a bottom surface of the battery pack and an enlarged perspective view of a ventilation port according to the first embodiment;
FIG. 11 is a schematic view in a case where the battery pack according to the first embodiment is cooled;
FIG. 12 is a perspective view from the bottom surface of the battery pack and an enlarged perspective view of a connector section for information communication according to the first embodiment;
FIG. 13 is a perspective view of a power source rack and the battery pack;
FIG. 14 is a perspective view in which the interior of the battery pack according to a conventional example is deployed; and
FIG. 15 is an exploded perspective view illustrating the internal structure of the battery block according to the conventional example.

### DETAILED DESCRIPTION OF THE EMBODIMENT(S)

Hereinafter, the embodiment of the present invention will be described referring to drawings. However, the following embodiments illustrate a battery pack which is aimed at embodying the technological concept of the present invention, and the present invention is not limited to the battery pack described below. Furthermore, in this specification, reference numbers corresponding to members illustrated in the embodiments are added to members illustrated in "Claims" and "Means of Solving the Problems" for the better understanding of Claims. However, the members illustrated in Claims are not limited to the members in the embodiments. In particular, as long as specific descriptions are not provided, it is not intended that the claims be limited to sizes, materials, shapes, and relative arrangements of constitutional members described in the embodiments, which are mere descriptive examples. It is noted that the magnitude or positional relation of the members illustrated in each diagram is sometimes grandiloquently represented, in order to clarify the description. Furthermore, in the description below, identical names and reference numbers represent identical or homogeneous members, and detailed descriptions are appropriately omitted. Moreover, mode may be applied where each element constituting the present invention constitutes a plurality of elements with the use of the same member, thereby serving the plurality of elements with the use of one member, or, in contrast, mode may be realized where a function of the one member is shared by a plurality of members. Also, a portion of examples and the content described in the embodiments can be applied to other examples and another embodiment.

### (Embodiment 1)

The battery pack of the present invention can be utilized as mount-type facilities for storage of electricity and can be applied for a power supply system in which electricity is charged by sunlight or by means of midnight power services and discharged as needed, for example, as a power source for household use and factory use. For these purposes, a plural sets of battery packs are coupled, and the battery packs are connected in series and/or in parallel, thereby increasing output, so that the power supply system can be constructed. In the power supply system, the plural sets of battery packs are connected in a row and connected with a controller at the end edge thereof, thereby controlling the battery packs. Also, the present embodiment is not limited to the mode where plural sets of the battery packs are coupled. Needless to say, the battery pack can be used as a single unit. For example, the battery pack can be used for a power supply for street lights, which is charged by sunlight in the daytime and discharged in the nighttime, or a back-up power supply for traffic lights that are driven during power failure.

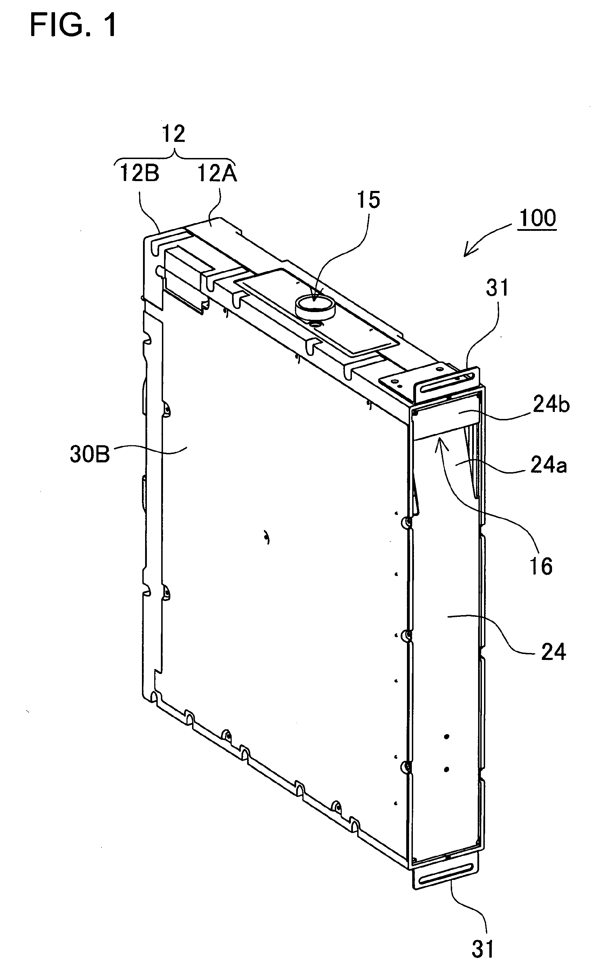

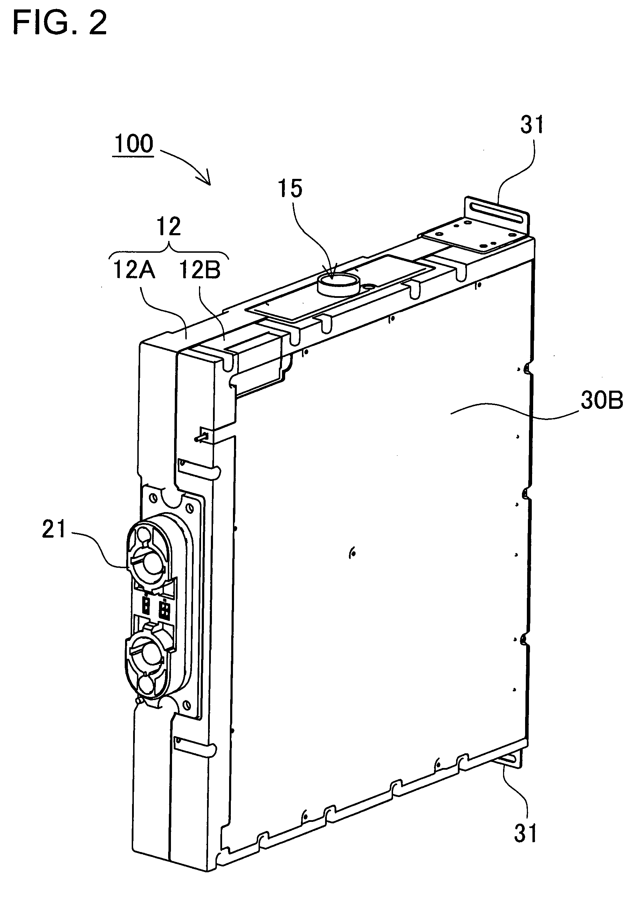

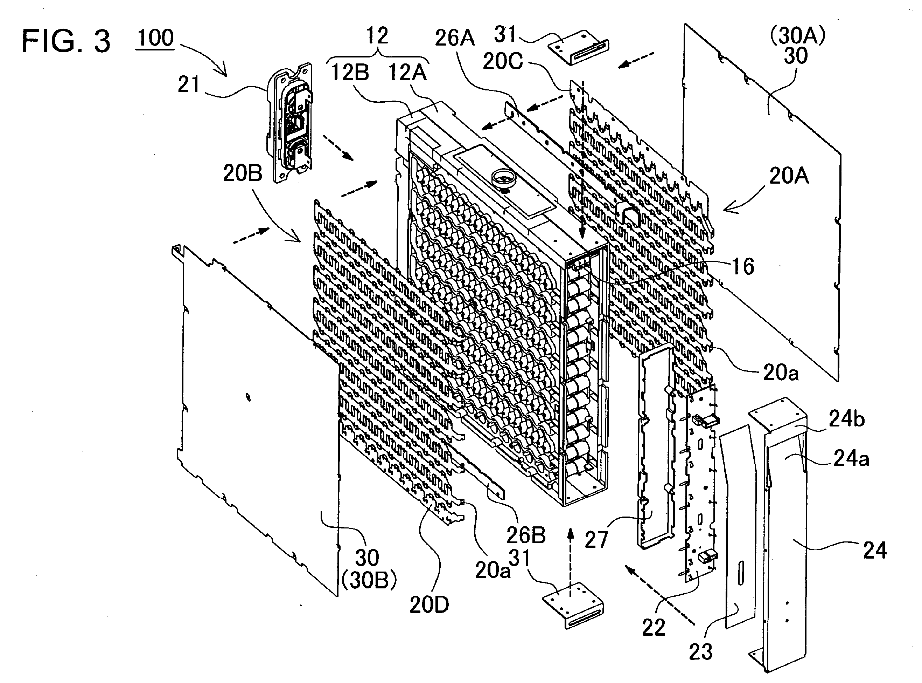

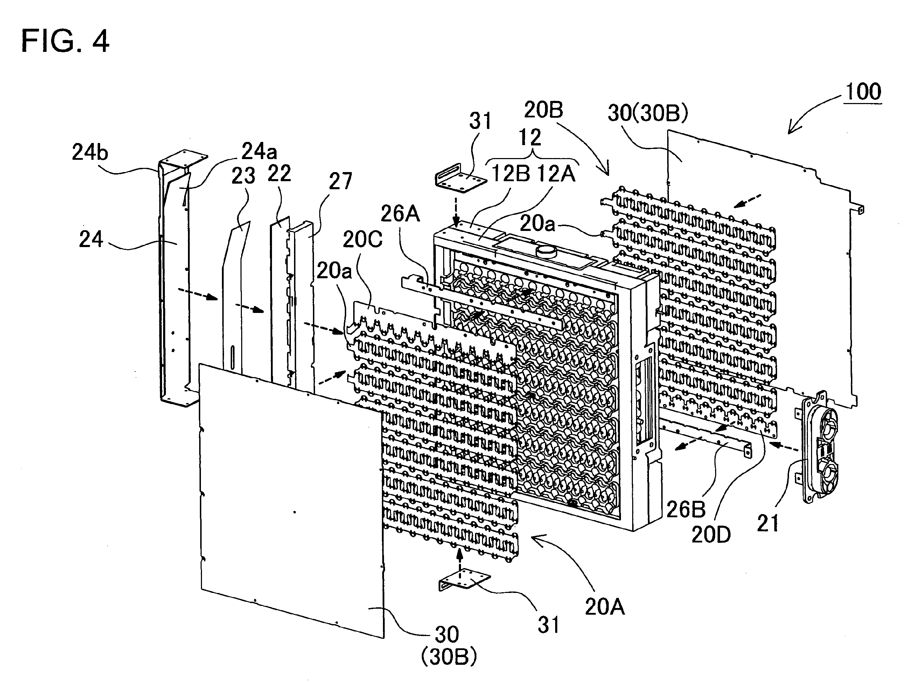

Herein, an example will be described where a battery pack 100 according to the embodiment of the present invention is applied to a power supply apparatus for a system, based on FIGs. 1 to 6. FIG.1 illustrates an external perspective view of the battery pack 100. This battery pack 100 can be inserted into a power supply rack and the like in an upright state and fixed with rack fixed metal fittings 31. Also, a connector section 16 is provided on an upper portion on the side surface of the battery pack 100, and further, a cylindrical exhaust port 15 is provided on the upper portion. Furthermore, FIG. 2 illustrates an external perspective view of the battery pack 100 viewed from the back surface of FIG. 1. Thus, a connection terminal 21 aimed at taking out power output to the outside is provided on the back surface of the battery pack 100. Moreover, also, FIG. 3 is an exploded perspective view illustrating the internal structure of the battery pack 100 according to FIG. 1, and FIG. 4 is an exploded perspective view illustrating the internal structure of the battery pack 100 viewed from the back surface in FIG. 3. As is illustrated in the diagrams, unit cells 11 are stored in an external case 12, fixed with a plurality of lead plates 20A and 20B on the both sides thereof, and covered with an external panel 30 on both external sides thereof.

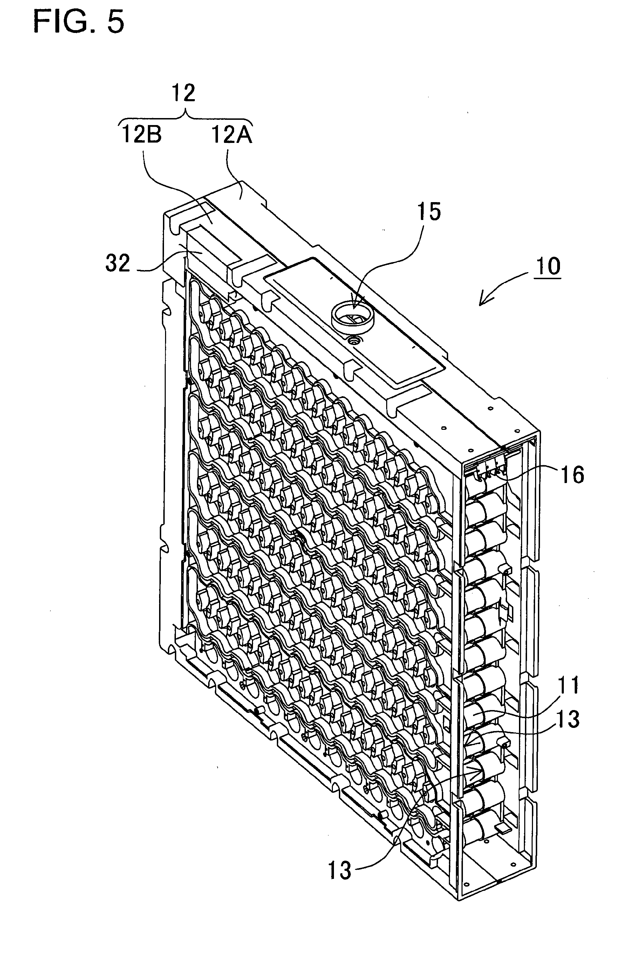

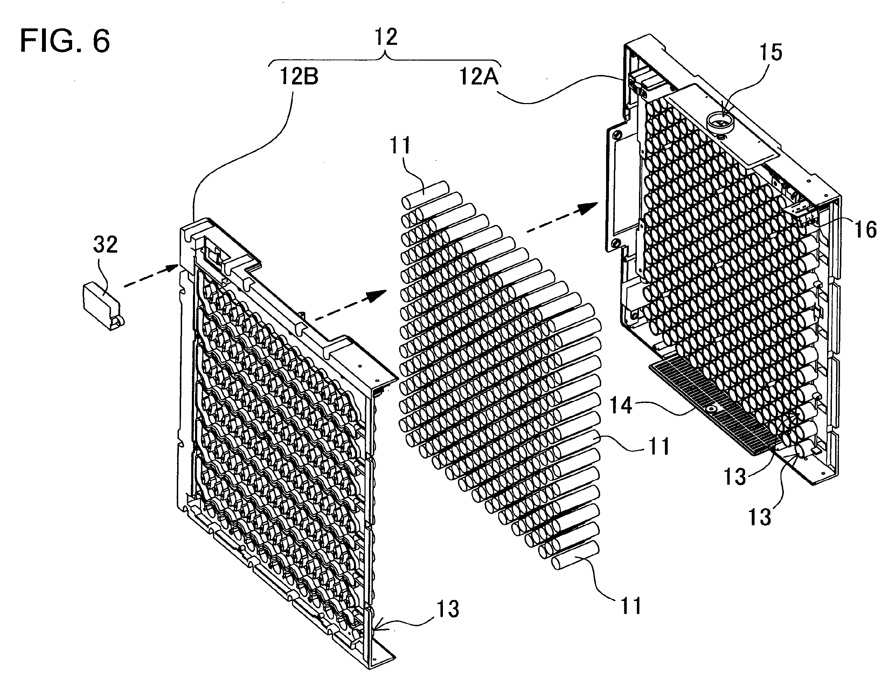

Furthermore, also, FIG. 5 is a perspective view of the external case 12 from which the external panel and lead plates are detached, and FIG. 6 is an exploded perspective view of this external case 12. The external case 12 is divided in two in the longitudinal direction, which is made up of a first external case 12A and a second external case 12B that hold the unit cells 11 therebetween. Accordingly, the first external case 12A and the second external case 12B each include a cylindrical battery storage section 13 on the internal surface thereof in order to store the cylindrical unit cells 11 separately. Also, a first ventilation port 14 is provided on the bottom surface of the first external case 12A, and further, a second ventilation port 15 is provided on the upper surface of the first external case 12A. Furthermore, a fuse cover 32 to cover a fuse FU is provided in the second external case 12B.

The battery storage sections 13 are provided in such a manner as to protrude approximately perpendicularly from the main surfaces of the first external case 12A and the second external case 12B. The length of each battery storage section 13 is about a third of the length of the unit cell 11. Then, the unit cells 11 are joined in such a manner to be caught between the first external case 12A and the second external case 12B on both sides thereof, whereby the two battery storage sections 13 hold the both end portions of the unit cells 11, and the central portion of the unit cells 11 are exposed to the interior of the external case 12. Accordingly, a space between the unit cells 11, which is abutted by the intermediate portion of the side surface of the unit cells 11, can be separated, so that the cooling effect of the unit cells 11 can be improved.

Thus, the battery storage sections 13 are provided in the first external case 12A and the second external case 12B, so that the unit cells 11 can directly be held with the external case 12 without the use of an inner case such as a battery holder, and the constitution of the case can be simplified. In particular, the external case and the battery holder are integrated, so that the number of components can be reduced, thereby achieving weight reduction and reduction in costs and simplifying assembly processes. Also, the intermediate portions of the side surface of the unit cells 11 are exposed, so that a space through which each unit cell 11 directly receives cooling gas can be formed, and in this point, cooling capacity can be enhanced, compared with a constitution in which the periphery of the unit cells is fully covered as a conventional battery holder.

Also, the battery holder and the external case are integrally constituted, an advantage in that an operating efficiency at the time of assembly can be improved is obtained by installing the lead plates 20A and 20B in the external case 12 in advance. In the examples illustrated in FIGs. 3 and 4, seven sets of lead plates 20A are provided, and a lead plate 20C disposed at the uppermost portion of the lead plates is connected to a bus bar 26A disposed on the upper surface of the external side of the first external case 12A. Furthermore, it is configured such that seven sets of lead plates 20B are provided, and a lead plate 20D disposed at the lowermost portion of the lead plates is connected to a bus bar 26B disposed on the lower surface of the external side of the second external case 12B. These lead plates and bus bars are embedded and arranged on the external side surface of the first external case 12A and the second external case 12B. Also, the lead plate 20C is connected in parallel to the two-tier unit cells 11 in 12 rows, which are arranged on the top tier, and the lead plate 20D is connected in parallel to the two-tier unit cells 11 in 12 rows, which are arranged on the bottom tier. Moreover, arrangement is configured such that the lead plates 20A and 20B are each connected in parallel to the two-tier unit cells 11 in 12 rows, and the unit cells 11 connected in parallel are arranged in 13 tiers and connected in series. Accordingly, 24 sets of unit cells are connected in parallel, and groups made up of 24 sets of unit cells are connected in series and in 13 tiers. Needless to say, the number of unit cells 11, the arrangement, and the connection method are not limited thereto, but can be changed in accordance with voltages and output capacity to be required.

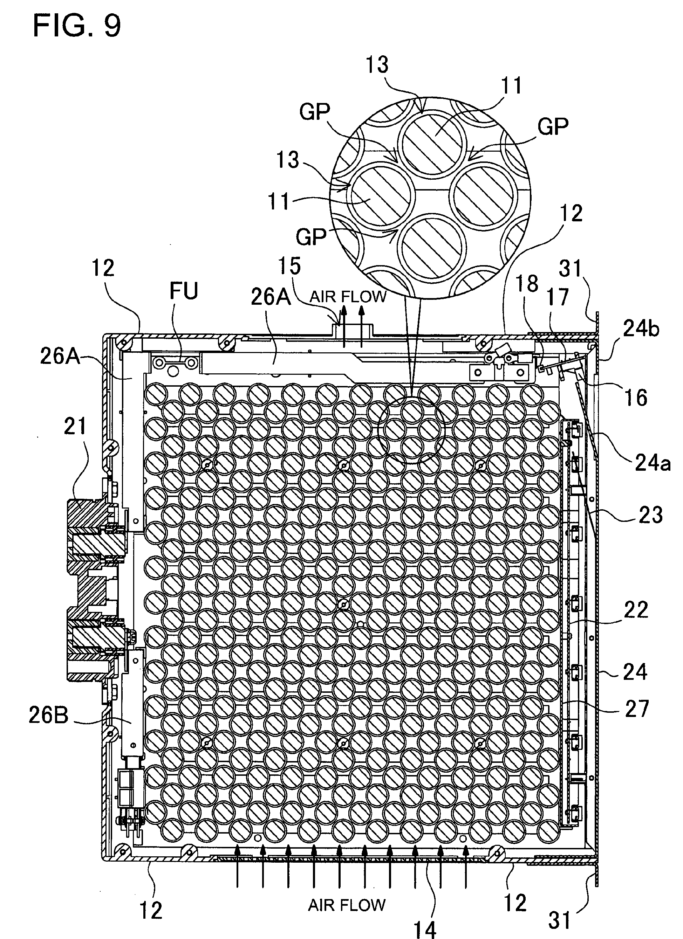

Furthermore, based on this constitution, as is illustrated in an enlarged cross-sectional view in FIG. 9, a gap GP between the battery storage sections 13 can be formed. That is, when the battery holder is constituted in a conventional way, it is required to join the battery storage sections which store the unit cells, which has been physically impossible to separate the battery storage sections with each other, and in contrast, according to the constitution in which the battery storage sections 13 are fixed on the internal surface of the first external case 12A and the second external case 12B, the battery storage sections 13 can be fixed with the first external case 12A and the second external case 12B, so that it is possible to provide the gap GP between the battery storage sections 13 adjacently disposed.

Also, as is illustrated by a vertical cross-sectional view in FIG. 9, this external case 12 separates the battery storage sections 13 adjacently disposed in the horizontal direction, thereby providing the gap GP, while arranging the battery storage sections 13 in an offset form in the vertical direction. Thus, even when heat is generated in the unit cells 11 stored in the battery storage section 13, the influence on the unit cells 11 adjacently disposed can be reduced by physically separating the battery storage sections 13. Also, the cooling gas to cool the unit cells 11 can be flown through the gap GP, thereby facilitating heat exchange with respect to each unit cell 11 with the use of the cooling gas, and the heat radiation can be improved further. In particular, according to the constitution in which the conventional battery holder is used, the unit cells are densely disposed and held, it is structurally difficult to provide the cooling gas on the side surfaces of the unit cells. According to the present embodiments, cooling is further facilitated with respect to not only the end surface but also the side surface of the unit cells 11, whereby more efficient cooling can be expected.

The first external case 12A and the second external case 12B are constituted by materials having excellent insulation properties. For example, resin is applied. Herein, a cylindrical secondary battery is used for the unit cells 11, and a plurality of cylindrical battery storage sections 13 are provided in the first external case 12A and the second external case 12B inwardly, so that the cylindrical unit cells 11 can be stored.

In this example, 13 sets of unit cells 11 are connected in series, and further, 24 groups of those are connected in parallel, whereby 312 sets of unit cells are totally used. Accordingly, the large-capacity battery pack 100 is constituted, in which a voltage ranges from about 40 V to 52 V, and the maximum capacity is approximately 50 Ah. It is noted that the number of unit cells 11, the arrangement, and the connection are not limited thereto. Needless to say, these can be changed corresponding to the voltages and output capacity as needed.

### (Unit Cell 11)

The exterior of the unit cells 11 is formed in a cylindrical shape. The unit cells serve as a lithium ion secondary battery, thereby increasing the output with respect to capacity and weight. Moreover, in place of the lithium ion secondary battery, a lithium polymer battery or a nickel-hydrogen battery can be used for the unit cells. Accordingly, in the present invention, the unit cells are not specified by the lithium ion battery, and all rechargeable batteries can be applied to the unit cells. Also, although the unit cells in the battery pack in the diagram are cylindrical unit cells, rectangular unit cells can be used in place of the cylindrical unit cells. Furthermore, a temperature sensor to detect a temperature is provided in the unit cells 11. The temperature sensor is provided in each unit cell, and it may be such that only the unit cell disposed at a representative position is monitored. Herein, one end of the direction that the cylindrical shape of the unit cell 11 extends is provided as a positive electrode, and the other end of the direction is provided as a negative electrode.

### (Open Frame 19)

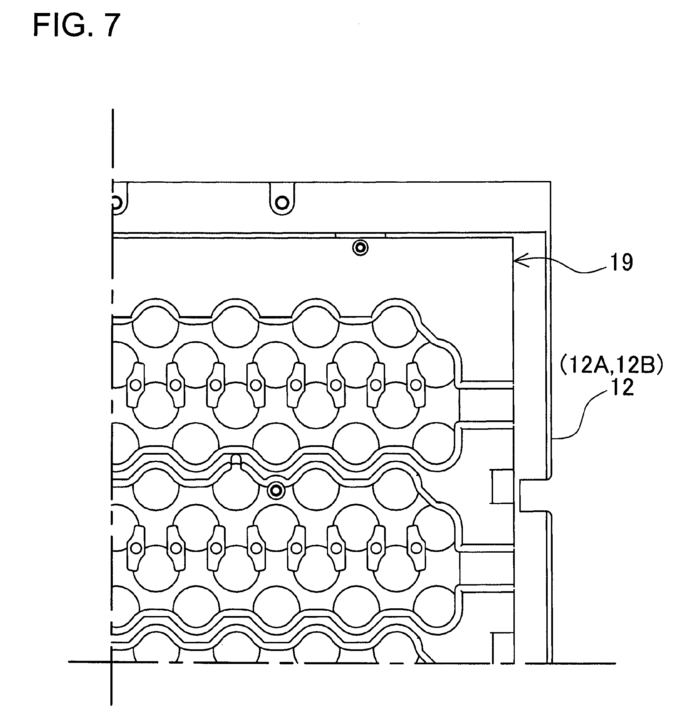

Furthermore, as is illustrated in FIG. 7, the first external case 12A and the second external case 12B each include an open frame 19 on the main surface thereof. The open frame 19 is provided in such a manner that an opening of the battery storage section 13 is communicated. Accordingly, the unit cells 11 stored in each battery storage section 13 are exposed in the external case 12 through the open frame 19, so that the heat radiation is improved.

Each open frame 19 is blocked by a first external panel 30A and a second external panel 30B. As is illustrated in the exploded perspective view of FIG. 3, the first external panel 30A and the second external panel 30B are tabular and formed in approximately the same size as that of the open frame 19. The first external panel 30A and the second external panel 30B are constituted by materials having excellent thermal conductivity.

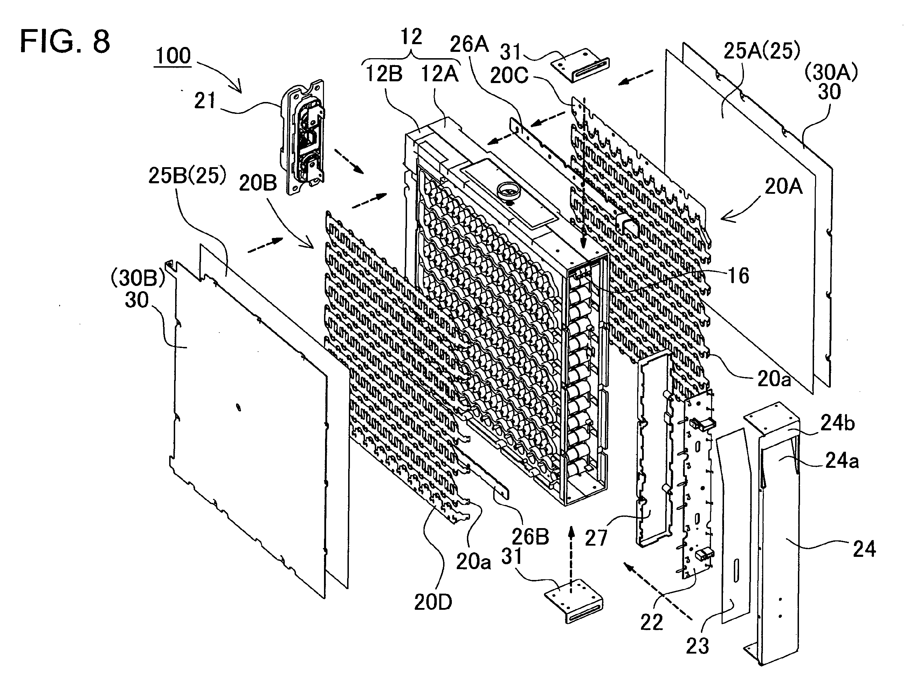

For example, the external panel 30 may be of metal having excellent thermal conductivity. In the example illustrated by the exploded perspective view of FIG. 8, each open frame 19 of the external case 12 allows a first insulation sheet 25A and a second insulation sheet 25B, which are insulation members having excellent thermal conductivity, to be interposed between the external panel 30 and the lead plates 20A and 20B, so that the short circuit of the unit cells 11 can be prevented while the first external panel 30A and the second external panel 30B, which are made of metal, are used. Accordingly, the end surface of the unit cells 11 is faced with the open frame 19, and further, heat can be radiated to the outside via the external panel 30 disposed on the open frame 19.

Although other constitution is not illustrated, a plurality of slits to be opened can be provided for the first external panel 30A and the second external panel 30B. Accordingly, the end surface of the unit cells 11 can directly be exposed to the outside air, and the heat radiation can be improved further. That is, the unit cells, which are conventionally surrounded by the external case and the battery holder and involved with difficulty in radiating heat to the outside, can be communicated with the outside through the open frame 19 of the external case 12 and the slits of the external panel 30, and the advantage in that the heat radiation can be improved is obtained.

Furthermore, as another example, a plurality of heat-radiation fins can be provided for the first external panel 30A and the second external panel 30B. Accordingly, the surface area of the external panel 30 is increased, so that the effect of heat radiation on the side surface of the external case 12 can be enhanced.

### (Ventilation Port)

Furthermore, as is illustrated in FIG. 6, the external case 12 opens a first ventilation port 14 and a second ventilation port 15. The ventilation ports are formed in a rectangular or circular shape, and preferably each provided on the opposite surface of the external case 12. Accordingly, the cooling gas is taken in through the first ventilation port 14, and the warmed cooling gas is discharged through the second ventilation port 15, thereby efficiently flowing the cooling gas into the external case 12.

Preferably, the first ventilation port 14 and the second ventilation port 15 are each opened approximately in the vertical direction. That is, in a posture for fixing the battery pack, the first ventilation port 14 and the second ventilation port 15 are each opened upwardly and downwardly. Accordingly, air, which is upwardly transferred by natural convection of heat in the interior of the external case 12, is discharged through the second ventilation port 15 which is upwardly opened, and fresh outside air is taken in through the first ventilation port 14 which is downwardly opened, whereby it can be configured to achieve natural heat radiation.

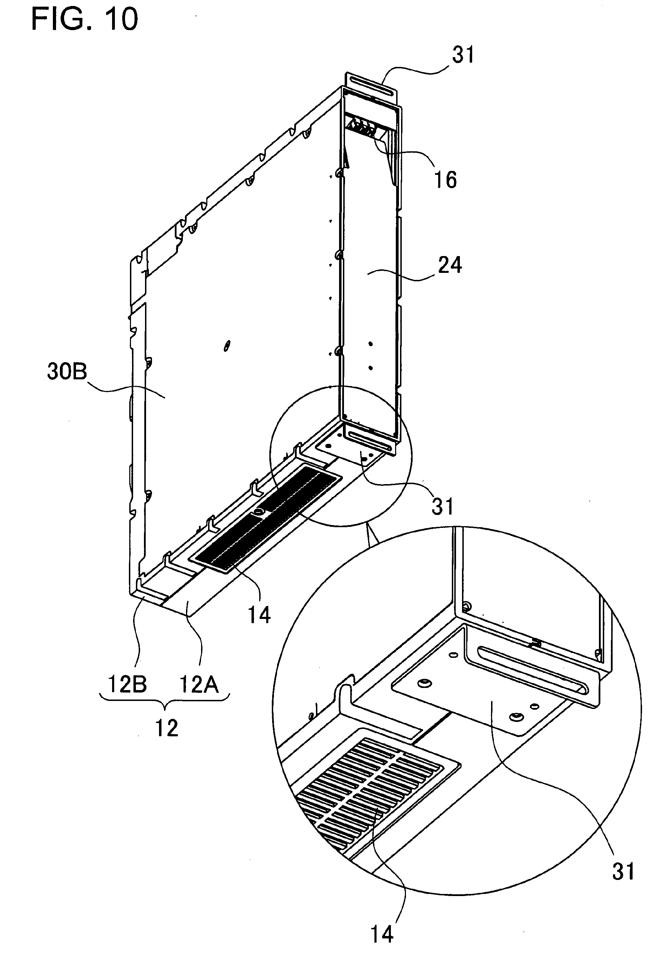

The example of FIG. 6 illustrates a state where the first ventilation port 14 and the second ventilation port 15 are attached to the first external case 12A. In the example of FIG. 10, the first ventilation port 14 is formed in a rectangular grid with respect to about two thirds of the width of the bottom surface of the external case 12, thereby allowing ventilation. In contrast, the second ventilation port 15 is opened in a circle on the upper surface of the external case 12, and a cylindrical guide is formed at the edge of its opening. Accordingly, the cooling gas is sent out to the second ventilation port 15 with the use of a rise in heat on the internal surface of the external case 12, so that the cooling air can be spread over the whole of the external case 12 through the first ventilation port 14. However, regarding the shape of the ventilation ports, it may be configured that both ventilation ports are formed in a rectangular grid, or cylindrical ventilation ports are provided at several positions of both ventilation ports.

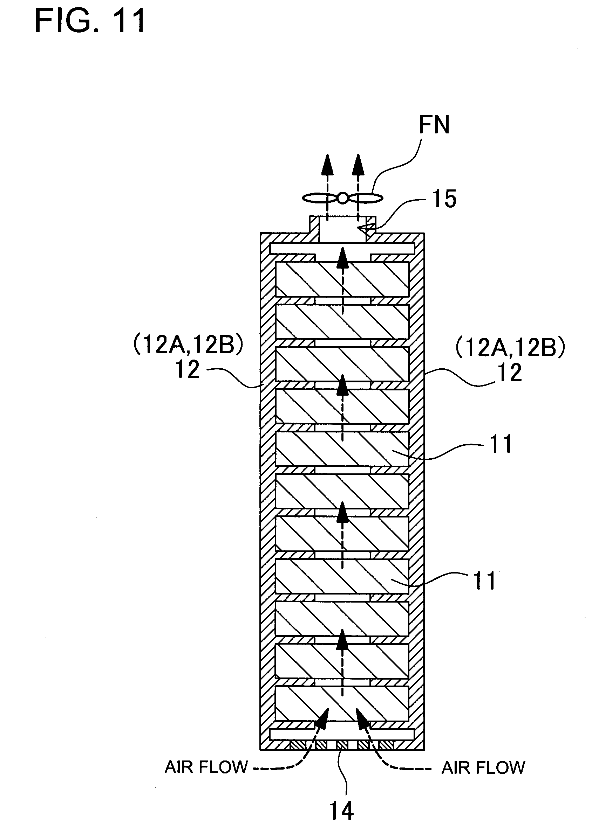

Also, a ventilation fan FN may be provided in the vicinity of the first ventilation port 14 or the second ventilation port 15, in order to allow the cooling gas to flow easily. In the example illustrated in FIG. 11, for example, the ventilation fan FN is provided in the vicinity of the second ventilation port 15 that is upwardly opened, and the air flows in such a manner that the ventilation fan FN draws the air in from the side of discharge. However, the present invention is not limited to this constitution, but may include the constitution in which the fan is disposed on the side of inhalation, and the outside air flows in such a manner as to thrust the outside air into the external case 12.

Then, as is described above, the opening surface is provided on the side surface of the external case 12, so that heat is radiated from the end surface of the unit cells 11 via the external panel 30, and in contrast, heat exchange is carried out by the flow of the cooling air on the side surface of the unit cells 11, and the unit cells 11 can efficiently be radiated as a whole. As a result, a larger electric current can flow through the unit cells 11, which achieves the high output characteristics of the battery pack.

### (Connector)

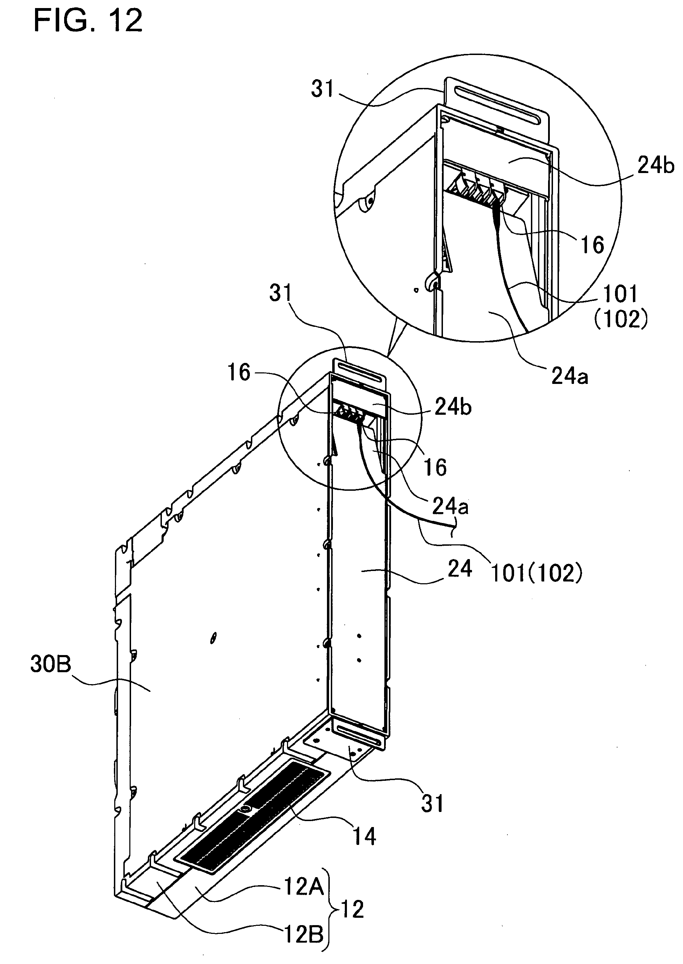

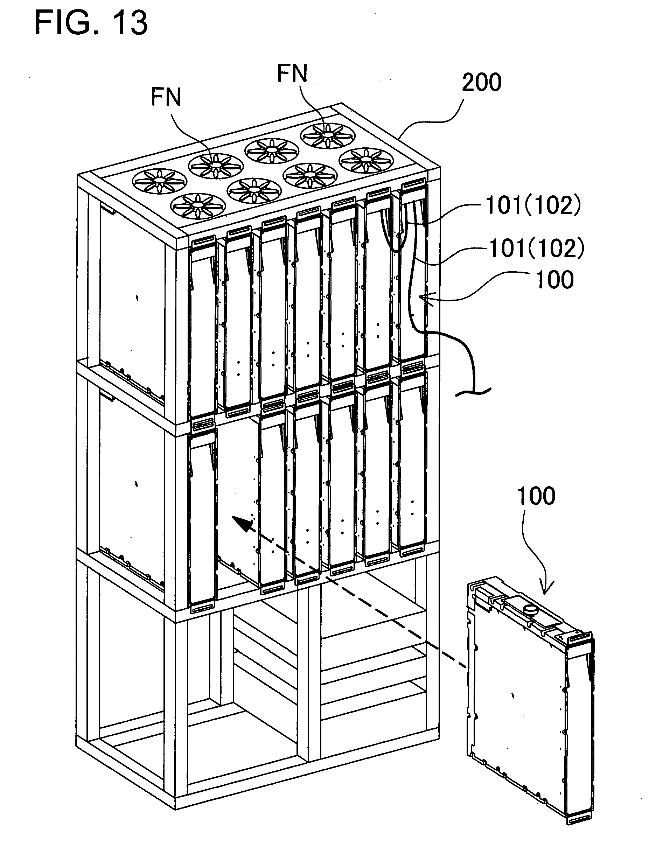

A protection circuit to monitor temperatures, voltages, and the like of the plurality of unit cells 11 is built in the battery pack 100. The protection circuit is mounted on a battery circuit board 22. Information detected by the protection circuit is outputted to an external apparatus via a connector section 16. Also, the connector section 16 performs communication with the external apparatus, so that signals from the external apparatus can be received on the side of the battery pack, thereby carrying out the processing. For example, it may be configured such that an anomalous signal is detected by the battery pack and transmitted to the external apparatus, and the stop of the power output is instructed by the external apparatus. The input-output connection of the connector section 16, for example, is electrically, magnetically, or optically connected via serial connections such as RS-422, RS-423, RS-485, and USB, parallel connections, or networks such as LAN and the like, so that communication can be performed. In the examples of FIGs. 12 and 13, the connector section 16 can be connected to an optical fiber 102 as a cable 101. Herein, the method of connecting the connector section 16 to the optical fiber 102 is described later, and the construction of the optical fiber 102 is provided in a way as to form a gentle curve. Thus, the optical fiber 102 is utilized for information transmission, so that a situation can be avoided where an external controller, another battery pack connected in series, or the like is affected by electromagnetic interference and high frequency noise, and the like, which are generated by the battery pack 100 or other external section.

Also, in the example of FIG. 12, the connector section 16 is upwardly arranged on the side surface of the battery pack 100. When a plurality of battery packs 100 are stored in a rack 200 in a state where the plurality of battery packs 100 are stacked on top of one another and side by side, as is illustrated in FIG. 13, this arrangement easily establishes the connection of the cable 101 between the battery packs 100. That is, when the cable 101 is connected between the plurality of battery packs 100 arranged side by side, a situation can be avoided where the cable 101 droops and rubs against the lower-tier battery pack 100 or another cable 101 connected between the lower-tier battery packs 100.

Also, the connector section 16 is fixed on a connector circuit board 17. Herein, with regards to the connector section 16 on the side surface of the external case 12, a depression is provided, not on the flat surface, but on the side surface, and the connector section 16 is configured to be arranged in the depression. Thus, when a connector jack of the cable 101 is connected to the connector section 16, the situation where the connector jack protrudes from the side surface of the external case 12 can be avoided, and an advantage in that the cable 101 can be arranged in limited space with a high space efficiency can be obtained. Also, the steps in a concave shape are provided for the depression of the side surface of the external case 12, and preferably, as is illustrated by the cross-sectional view of FIG. 9, on the side surface of the external case 12, an inclined surface 24a is provided that is successively inclined on the flat surface of the side surface from downward to upward. Furthermore, the connector circuit board 17 is fixed approximately perpendicular to the inclined surface 24a in such a manner that the connector jack can be inserted and removed approximately parallel to the inclined surface 24a. Accordingly, as is illustrated in FIG. 13, when it is assumed that the cable 101 connected to the connector section 16 is the optical fiber 102, the optical fiber 102 can be bent and drawn out gradually, gently from the connector section 16 along with the inclined surface 24a, without forcibly bending the optical fiber 102 extended from the connector jack, so that the damage of the optical fiber 102 can be avoided. Furthermore, the amount of protrusion with regard to the optical fiber can be restrained in the vertical direction of the side surface, that is, in the direction that the optical fiber protrudes on the side of the side surface.

Also, the connector circuit board 17 is held in the interior of the external case 12 in such a manner as to keep the connector circuit board 17 in a slanted posture, which is not parallel to the side surface of the external case 12. In the external case 12, as is illustrated in FIG. 9, an attachment groove 18 to retain the connector circuit board 17 is provided.

The inclined surface 24a described above is integrally molded with the side surface of the external case 12, so that the inclined surface 24a can be formed. However, preferably, as is illustrated in FIG. 3, a connector cover 24, which is a member separate from the external case 12, is prepared, and the inclined surface 24a is provided on the connector cover 24, and it is constituted such that the side surface of the battery pack 100 is covered with the connector cover 24. In this way, after the first external case 12A and the second external case 12B are joined, the battery circuit board 22 is installed, and further, the connector cover 24 including the inclined surface 24a is installed on the battery circuit board 22, so that the assembly operation can readily be performed.

Furthermore, regarding the connector cover 24, preferably, as is illustrated in the cross-sectional view in FIG. 9, the inclined surface 24a is provided, and in contrast, it is preferable that the tip end of the inclined surface 24a be provided as an open end, and the connector circuit board 17 be configured in such a manner as to be arranged at the open end. In particular, in FIG. 9, the connector cover 24 includes the inclined surface 24a that is inclined from downward to upward of the connector cover 24, and in contrast, a flat portion 24b flush with the surface of the connector cover 24 is provided above the inclined surface 24a. Then, the connector circuit board 17 is arranged on the inner side of the flat portion 24b, so that the connector is protected by the flat portion 24b, which serves as eaves, so that the infiltration of dust into the connector portion can be reduced. In particular, when the external case 12 is arranged in a posture as illustrated in FIG. 9, and all the depressions provided on the side surface of the external case 12 are formed by integral molding with the connector cover 24, as a matter of convenience in stripping the mold, the depressions are required to be formed in such a manner as to widen toward the opening side, which causes a spread on the upward side of the opening side, and consequently makes it easy for dust to infiltrate. In contrast, when the end edge of the inclined surface 24a is provided as the open end, whereby the connector circuit board 17 as a separate member is configured to be arranged, it is possible to arrange the connector circuit board 17 at the side of the innermost part (the side of the back surface of the flat portion 24b in FIG. 9), whereby obtaining an advantage in that structure where dust does not easily infiltrate can be provided. Also, in the example of FIG. 9, the length of the connector circuit board 17 is provided longer than the depth of the depression, so that a space where the connection terminal 21 to the battery circuit board 22 is provided can be secured on the connector circuit board 17.

### (Battery Circuit Board 22)

Regarding the information for the aforementioned connector section 16, as is illustrated in the exploded perspective view of the battery pack 100 in FIG. 3, the input and output of the information is carried out by the battery circuit board 22 provided in the interior on the side surface of the battery pack 100. This battery circuit board 22 is constituted by a voltage detection circuit of each unit cell 11, a temperature detection circuit in the battery pack 100, a CPU that controls these circuits, devices, and the like. Furthermore, the constitution of the temperature detection circuit, which is an aggregate of a current detection circuit and each unit cell 11 or the plurality of cell elements 11, can be performed. Moreover, the battery pack 100 is provided in such a manner that it is configured to attach an insulation plate 23 that protects the battery circuit board 22 and the connector cover 24 on the side surface of the battery pack 100. Metal such as SUS 304 can be utilized for the connector cover 24, or resin materials can be applied.

The battery circuit board 22 is inserted into a circuit board holder 27. The circuit board holder 27 is formed in a bottomed box shape and formed in a size which is large enough for the battery circuit board 22 to be inserted, and encloses the periphery of the battery circuit board 22 with the peripheral walls thereof in a state where the battery circuit board 22 is inserted. The battery circuit board 22 is arranged at a home position in the external case 12 via the circuit board holder 27. Also, the lead plates 20A and 20B connected to the end surface of the unit cells 11 are extended and conducted to the battery circuit board 22 in order to connect the battery circuit board 22 to the unit cells 11. In the examples of FIGs. 3 and 4, the end edge of the lead plates 20A and 20B is extended and bent, a concave notch at which the bent piece 20a of the lead plates 20A and 20B is locked is formed on the peripheral wall of the circuit board holder 27.

The electrode terminals of 14 systems, which is the sum of seven systems on the side of the first external case 12A by means of the lead plate 20A on the external side surface of the external case 12 and seven systems on the side of the second external case 12B by means of the lead plate 20B, are connected to the battery circuit board 22 as the bent piece 20a. Accordingly, the voltages of the plurality of unit cells 11 are detected by the voltage detection circuit for every parallel circuit, thereby managing the voltages. Accordingly, the overdischarging and overcharging can be prevented.

Furthermore, the battery circuit board 22 is configured to include a circuit that outputs information in which a CPU or other device determines whether the information detected by each detection circuit is in a normal operation state or in an abnormal operation state, and a circuit that collects information from other external controllers.

The direct transmission of information to the controllers is performed, so that it is possible to rapidly determine defective portions (defective battery packs), and it is possible to avoid the delay in determining the defective portions and obtain an advantage in that immediate replacement can be carried out.

### (Connection Terminal 21)

On the other hand, regarding the connection terminal 21 as an output terminal for a high voltage of the battery pack, as is illustrated in FIG. 4, the first external case 12A is formed in a convex shape on the side surface thereof, and includes an installation port for the connection terminal 21 to which a high voltage is outputted, and the second external case 12B is formed in a concave shape on the side surface thereof and can be integrally joined with the first external case 12A, and the connection terminal 21 is configured to be equipped with the installation port provided in the first external case 12A. Furthermore, regarding one of negative and positive terminals of the connection terminal 21, the bus bar 26A disposed on the upper surface of the external side of the first external case 12A illustrated in FIG. 4 is connected to the bus bar 26A disposed on the upper surface of the inner side of the external case 12 illustrated in FIG. 9, which is connected to the bus bar 26A disposed on the surface side on the upper side via the fuse FU, and its tip is connected to one terminal of the connection terminal 21. Furthermore, regarding the other of negative and positive terminals of the connection terminal 21, the bus bar 26B disposed on the lower surface of the external side of the second external case 12B illustrated in FIG. 3 is connected to the bus bar 26B disposed on the lower-left side surface of the external case 12 illustrated in FIG. 9, and its tip is connected to the other terminal of the connection terminal 21. Accordingly, a high voltage of unit cells 11 connected in series and/or in parallel is configured to be outputted to the connection terminal 21.

Furthermore, as is illustrated in FIG. 9, the connection terminal 21 to which the high voltage of the battery pack 100 is applied is disposed on the reverse side surface with respect to the battery circuit board 22, that is, disposed apart from the battery circuit board 22, so that the influence of the high frequency noise of an output current on the battery circuit board 22 can be suppressed. Moreover, the influence of the connector section 16 connected to the battery circuit board 22 on external controllers and another battery pack connected in series can be reduced.

Also, the battery pack can appropriately be utilized for a back-up power source apparatus that can be mounted on the rack 200 of a computer server illustrated in FIG. 13 and the like, or a back-up power source apparatus for wireless base station such as cellular phones, or an electrical storage apparatus combined with solar batteries and the like.

## Claims

1. A battery pack comprising:
a plurality of unit cells (11) whose exterior is extended in one direction and formed in a cylindrical shape;
a first external case (12A) whose external shape is formed in a rectangular shape; and
a second external case (12B) whose external shape is formed in a rectangular shape, wherein
the first external case (12A) and the second external case (12B) each include battery storage sections (13) configured to store the cylindrical unit cells (11) separately and being disposed on inner surfaces of the first external case (12A) and the second external case (128), respectively, wherein each of the battery storage sections (13) of the first external case (12A) and of the second external case (128) is protruded perpendicularly from a main surface of the corresponding case (12A, 128), and
the second external case (12B) is configured to join the first external case (12A), so that the battery storage sections (13) of the first external case (12A) and the battery storage sections (13) of the second external case (12B) hold both end portions of the unit cells (11) in such a manner as to sandwich the unit cells (11) between both sides in a longitudinal direction,
**characterized in that**
the battery storage sections (13) are cylindrical battery storage sections (13), each being configured to individually store a cylindrical unit cell (11), and
a gap (GP) is provided between adjacent battery storage sections (13) in the first external case (12A) and in the second external case (12B), thus physically separating battery storage sections in both cases (12A, 12B).

2. The battery pack according to claim 1, wherein
each of the first external case (12A) and the second external case (12B) includes an open frame (19) provided such that each of the battery storage sections (13) is open through the open frame (19), and
the battery pack further includes a first external panel (30A) and a second external panel (30B) each of which being provided to block the open frame (19) in the first external case (12A) and the second external case(12B), respectively.

3. The battery pack according to claim 2, wherein each of the first external panel (30A) and the second external panel (30B) includes a plurality of open slits.

4. The battery pack according to any one of claims 2 or 3, wherein
at least any of the first external case (12A) and the second external case (12B) is configured to include a first ventilation port (14) opened on a first surface constituted in a rectangular shape and a second ventilation port (15) opened on a second surface opposite to the first surface, and
the battery pack is held in a posture in which the first ventilation port (14) and the second ventilation port (15) are each opened in a vertical direction.

5. The battery pack according to claim 4, wherein
each of the first surface and the second surface is intersected with a surface on which the opening surface is provided by the open frames (19) of the first external case (12A) and the second external case (12B), respectively.

6. The battery pack according to any one of claims 2 to 5, wherein
the first external case (12A) and the second external case (12B) is made of resin, the first external panel (30A) and the second external panel (30B) are made of metal,
each of the first external case (12A) and the second external case (12B) includes lead plates (20A, 20B) for connecting the unit cells (11),
the first insulation sheet (25A) and the second insulation sheet (25B) have high thermal conductivity and are made of resin having insulation properties,
the first external case (12A) and the second external case (12B) further comprise a first insulation sheet (25A) and a second insulation sheet (25B) made of insulation members, respectively,
the first insulating sheet (25A) is interposed between the first external panel (30A) and the lead plates (20A) of the first external case (12A), and
the second insulating sheet (25B) is interposed between the second external panel (30B) and the lead plates (20B) of the second external case (12B).

## Patentansprüche

1. Batteriepackung, umfassend:
eine Vielzahl von Einheitszellen (11), deren Äußeres sich in einer Richtung erstreckt und die in einer zylindrischen Form gebildet sind;
ein erstes äußeres Gehäuse (12A), dessen äußere Form in einer rechteckigen Form gebildet ist; und
ein zweites äußeres Gehäuse (12B), dessen äußere Form in einer rechteckigen Form gebildet ist, wobei
das erste äußere Gehäuse (12A) und das zweite äußere Gehäuse (12B) jeweils Batterielagerungsabschnitte (13) enthalten, die konfiguriert sind, die zylindrischen Einheitszellen (11) getrennt zu lagern, und die jeweils auf inneren Oberflächen des ersten äußeren Gehäuses (12A) und des zweiten äußeren Gehäuses (12B) angeordnet sind, wobei jeder der Batterielagerungsabschnitte (13) des ersten äußeren Gehäuses (12A) und des zweiten äußeren Gehäuses (12B) senkrecht von einer Hauptoberfläche des entsprechenden Gehäuses (12A, 12B) vorragt, und das zweite äußere Gehäuse (12B) konfiguriert ist, mit dem ersten äußeren Gehäuse (12A) verbunden zu sein, so dass die Batterielagerungsabschnitte (13) des ersten äußeren Gehäuses (12A) und die Batterielagerungsabschnitte (13) des zweiten äußeren Gehäuses (12B) beide Endbereiche der Einheitszellen (11) derart halten, dass die Einheitszellen (11) zwischen beiden Seiten in einer longitudinalen Richtung zwischengelegt sind,
**dadurch gekennzeichnet, dass**
die Batterielagerungsabschnitte (13) zylindrische Batterielagerungsabschnitte (13) sind, die jeweils konfiguriert sind, individuell eine zylindrische Einheitszelle (11) zu lagern, und
eine Lücke (GP) zwischen benachbarten Batterielagerungsabschnitten (13) in dem ersten äußeren Gehäuse (12A) und in dem zweiten äußeren Gehäuse (12B) vorgesehen sind, wobei somit die Batterielagerungsabschnitte in beiden Gehäusen (12A, 12B) körperlich getrennt sind.

2. Batteriepackung gemäß Anspruch 1, wobei jedes von dem ersten äußeren Gehäuse (12A) und dem zweiten äußeren Gehäuse (12B) einen offenen Rahmen (19) enthält, der derart vorgesehen ist, dass jeder der Batterielagerungsabschnitte (13) durch den offenen Rahmen (19) offen ist, und die Batteriepackung ferner eine erste äußere Platte (30A) und eine zweite äußere Platte (30B) enthält, von denen jede vorgesehen ist, um den offenen Rahmen (19) jeweils entsprechend in dem ersten äußeren Gehäuse (12A) und dem zweiten äußeren Gehäuse (12B) zu blockieren.

3. Batteriepackung gemäß Anspruch 2, wobei jede von der ersten äußeren Platte (30A) und der zweiten äußeren Platte (30B) eine Mehrzahl von offenen Schlitzen enthält.

4. Batteriepackung gemäß einem der Ansprüche 2 oder 3, wobei
mindestens eines von dem ersten äußeren Gehäuse (12A) und dem zweiten äußeren Gehäuse (12B) konfiguriert ist, einen ersten Ventilationsanschluss (14), der auf einer ersten Fläche, die in einer rechteckigen Form gebildet ist, und einen zweiten Ventilationsanschluss (15) zu enthalten, der auf einer zweiten Fläche gegenüber zur ersten Fläche geöffnet ist, und die Batteriepackung in einer Stellung gehalten ist, in der der erste Ventilationsanschluss (14) und der zweite Ventilationsanschluss (15) jeweils in einer vertikalen Richtung geöffnet sind.

5. Batteriepackung gemäß Anspruch 4, wobei jede von der ersten Fläche und der zweiten Fläche sich mit einer Fläche schneidet, auf der die geöffnete Fläche durch die offenen Rahmen (19) jeweils entsprechend des ersten äußeren Gehäuses (12A) und des zweiten äußeren Gehäuses (12B) bereitgestellt wird.

6. Batteriepackung gemäß einem der Ansprüche 2 bis 5, wobei
das erste äußere Gehäuse (12A) und das zweite äußere Gehäuse (12B) aus Harz hergestellt sind,
die erste äußere Platte (30A) und die zweite äußere Platte (30B) aus Metall hergestellt sind,
jedes von dem ersten äußeren Gehäuse (12A) und dem zweiten äußeren Gehäuse (12B) Leiterplatten (20A, 20B) zur Verbindung der Einheitszellen (11) enthält,
das erste Isolationsblatt (25A) und das zweite Isolationsblatt (25B) eine hohe thermische Leitfähigkeit haben und aus Harz hergestellt sind, das isolierende Eigenschaften hat,
das erste äußere Gehäuse (12A) und das zweite äußere Gehäuse (12B) ferner ein erstes Isolationsblatt (25A) und ein zweites Isolationsblatt (25B) umfassen, die jeweils aus Isolationselementen hergestellt sind,
das erste Isolationsblatt (25A) zwischen der ersten äußeren Platte (30A) und den Leiterplatten (20A) des ersten äußeren Gehäuses (12A) zwischengelegt ist, und
das zweite Isolationsblatt (25B) zwischen der zweiten äußeren Platte (30B) und den Leiterplatten (20B) des zweiten äußeren Gehäuses (12B) zwischengelegt ist.

## Revendications

1. Bloc batterie, comprenant :
une pluralité de cellules unitaires (11) dont l'extérieur est étendu dans une direction et est de forme cylindrique ;
un premier boîtier externe (12A) dont la forme externe est de forme rectangulaire ; et
un second boîtier externe (12B) dont la forme externe est de forme rectangulaire, dans lequel
le premier boîtier externe (12A) et le second boîtier externe (12B) incluent chacun des sections de stockage de batterie (13) configurées pour stocker les cellules unitaires cylindriques (11) séparément et étant disposées sur des surfaces intérieures du premier boîtier externe (12A) et du second boîtier externe (128), respectivement, dans lequel chacune des sections de stockage de batterie (13) du premier boîtier externe (12A) et du second boîtier externe (128) est en saillie perpendiculairement à partir d'une surface principale du boîtier correspondant (12A, 128), et
le second boîtier externe (12B) est configuré pour joindre le premier boîtier externe (12A), pour que les sections de stockage de batterie (13) du premier boîtier externe (12A) et les sections de stockage de batterie (13) du second boîtier externe (12B) retiennent les deux portions d'extrémité des cellules unitaires (11) de manière telle à prendre en sandwich les cellules unitaires (11) entre les deux côtés dans une direction longitudinale,
**caractérisé en ce que**
les sections de stockage de batterie (13) sont des sections de stockage de batterie cylindriques (13), chacune étant configurée pour individuellement stocker une cellule unitaire cylindrique (11), et
un espace (GP) est prévu entre des sections de stockage de batterie adjacentes (13) dans le premier boîtier externe (12A) et dans le second boîtier externe (12B), séparant ainsi physiquement des sections de stockage de batterie dans les deux boîtiers (12A, 12B).

2. Bloc batterie selon la revendication 1, dans lequel
chacun du premier boîtier externe (12A) et du second boîtier externe (12B) inclut un cadre ouvert (19) prévu de telle sorte que chacune des sections de stockage de batterie (13) soit ouverte à travers le cadre ouvert (19), et
le bloc batterie inclut en outre un premier panneau externe (30A) et un second panneau externe (30B) dont chacun est prévu pour bloquer le cadre ouvert (19) dans le premier boîtier externe (12A) et le second boîtier externe (12B), respectivement.

3. Bloc batterie selon la revendication 2, dans lequel chacun du premier panneau externe (30A) et du second panneau externe (30B) inclut une pluralité de fentes ouvertes.

4. Bloc batterie selon l'une quelconque des revendications 2 ou 3, dans lequel
au moins l'un quelconque du premier boîtier externe (12A) et du second boîtier externe (12B) est configuré pour inclure un premier orifice de ventilation (14) ouvert sur une première surface constituée en une forme rectangulaire et un second orifice de ventilation (15) ouvert sur une seconde surface opposée à la première surface, et
le bloc batterie est retenu dans une position dans laquelle le premier orifice de ventilation (14) et le second orifice de ventilation (15) sont chacun ouverts dans une direction verticale.

5. Bloc batterie selon la revendication 4, dans lequel
chacune de la première surface et de la seconde surface est intersectée avec une surface sur laquelle la surface d'ouverture est fournie par les cadres ouverts (19) du premier boîtier externe (12A) et du second boîtier externe (12B), respectivement.

6. Bloc batterie selon l'une quelconque des revendications 2 à 5, dans lequel
le premier boîtier externe (12A) et le second boîtier externe (12B) sont faits de résine,
le premier panneau externe (30A) et le second panneau externe (30B) sont faits de métal,
chacun du premier boîtier externe (12A) et du second boîtier externe (12B) inclut des plaques de connexion (20A, 20B) pour connecter les cellules unitaires (11),
la première feuille d'isolation (25A) et la seconde feuille d'isolation (25B) présentent une haute conductivité thermique et sont faites de résine possédant des propriétés d'isolation,
le premier boîtier externe (12A) et le second boîtier externe (12B) comprennent en outre une première feuille d'isolation (25A) et une seconde feuille d'isolation (25B) faites d'organes d'isolation, respectivement,
la première feuille isolante (25A) est interposée entre le premier panneau externe (30A) et les plaques de connexion (20A) du premier boîtier externe (12A), et
la seconde feuille isolante (25B) est interposée entre le second panneau externe (30B) et les plaques de connexion (20B) du second boîtier externe (12B).
